# EUROPEAN PATENT APPLICATION

(11) **EP 2 156 982 A1**
(43) Date of publication of application: **24.02.2010**
(21) Application number: 09447043.2
(22) Date of filing: 18.08.2009
(51) Int. Cl.: B60P 3/22

(54) **Tanker for the transport of hazardous products**

(30) Priority: 20.08.2008 BE 200800458
(71) Applicant: Transport Nagels, naamloze vennootschap, 2970 Schilde (BE)
(72) Inventor: Nagels, Robert, 2900 Schoten (BE)
(74) Representative: Donné, Eddy

(57) **Abstract**

Tanker (1) for the transport of hazardous products which is at least provided with a trailer (2) with a tank (3), **characterised in that** the tank (3) is provided with means for using the tank (3) for training purposes, and in that the tank (3) is provided with a double wall (4) of which at least the outer wall (5) is partly opened out.

## Description

The present invention concerns a tanker for the transport of hazardous products.

It is known that lorry drivers transporting hazardous products must be aware of any possible dangers which said transport implies.

Therefore, there are different regulations, such as for example the ADR legislation which regulates the international transport of dangerous goods.

These rules include among others instructions regarding the training of drivers of vehicles carrying dangerous goods and of the persons involved with the loading and unloading of these goods.

The goods must not only comply with regulations regarding packaging and/or labelling, also the equipment of the vehicles, personal protection means and the like must be defined in clear instructions.

In practice, training the drivers and other persons involved in the transport of these goods is not easy, and, as a consequence, said persons are often not well informed about the equipment of the vehicle and the safety instructions.

Anyhow, teaching the necessary know-how about the transport of dangerous goods is made difficult since many safety provisions and many elements of the equipment are indeed present in a tank, but remain invisible to the driver.

The present invention aims to remedy one or several of the above-mentioned and other disadvantages by providing a didactic tanker for the transport of dangerous goods whereby the tank is provided with means for using the tank for training purposes, and whereby the tank is provided with a double wall of which at least the outer wall is partly opened out.

An advantage is that the training of lorry drivers and other persons involved in the transport of hazardous products can be done much more efficiently.

Another advantage is that the knowledge acquired during the training will be memorised better as the equipment has been visualized.

The tank preferably has an access to the inner space.

An advantage is that the inner space of the tank is accessible and that the provisions which are not visible from the outside of the tank can be observed.

In order to better explain the characteristics of the invention, the following preferred embodiment of a tanker according to the invention is described with reference to the accompanying drawing, in which:

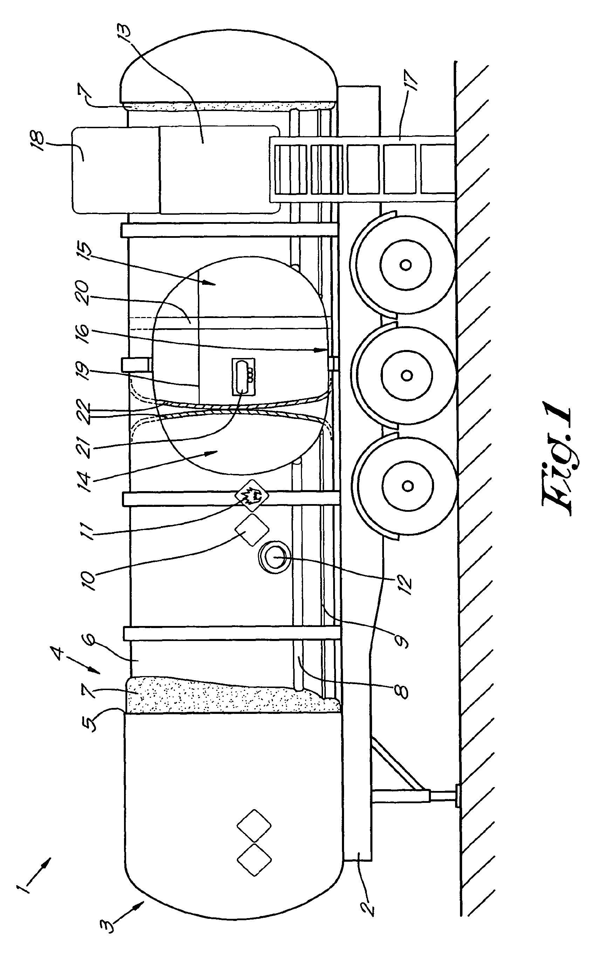

Figure 1 schematically represents a tanker according to the invention, with a part of the wall of the tanker that has been cut out.

Figure 1 schematically represents a tanker 1 which is in this case made as a trailer 2 with a tank 3.

According to the invention, the tank 3 is provided with means which make it possible to use the tank 3 for training purposes, and the tank 3 is provided with a double wall 4 of which at least the outer wall 5 is partly opened out.

Figure 1 illustrates the conventional structure of the wall 4 of such a tank 3, which wall 4 is made of an inner wall 6 and an outer wall 5 in between which one or several additional insulating layers 7 may be provided.

In a preferred embodiment of the invention, the inside and/or the outside of the tank 3 is provided with one or several didactical messages and/or indications.

Warming-up channels 8, steam channels 9 and the like are preferably provided on the outside of the tanker 1, and they are tagged.

On the outer wall 5 and the inner wall 6 are further provided provisions 10 which make it possible to apply warning signals 11 on the tanker 1, which warning signals 11 relate to the goods to be transported, in particular warning signals 11 referring to goods whose transport should comply with the ADR regulations.

In a practical embodiment, said provisions 10 may consist of holders onto which plates with warning signals 11 can be fixed.

In a preferred embodiment of the invention, the wall of the tank 3 is provided with viewing windows 12, such that the inner space of the tank with all available provisions can be observed directly from the outside.

According to a preferred characteristic of the invention, the tank 3 has an access 13 to the inner space.

The tanker 1 may be either or not divided in several compartments 14.

At least one of the aforesaid compartments 14 is made accessible to persons.

The accessible compartment 15 is provided with an access 13 in the wall of the container 3 and is further preferably equipped with a floor 16 in the shape of a grid.

The access 13 to the tank 3 is preferably provided in the shape of a removable stepladder 17, such that the access 13 to the compartment 14 is made easier, and the stepladder 17 can be stored in the inner space when moving the tanker 1.

The access to the compartment 14 can preferably be sealed by means of a lid 18, either or not by hinge-mounting a wall part in relation to the fixed wall 4 of the tank 1.

The accessible compartment 14 is preferably provided with elements 19 which are important when transporting hazardous products.

Thus, several provisions 19 for training purposes may be provided in the compartment 14 corresponding to the provisions that are found in a conventional tanker, such as for example one or several pressure pipes, a plunger pipe and the like 20, as well as explanatory illustrations 21 on the inside.

Preferably, at least one pressure pipe is provided, running along the tanker 1 into the tank 3 or in a compartment 14 thereof, and which is at least partly visible as the outer wall 5 is opened out.

In a tanker 1 containing several compartments 14, the different compartments 14 are separated by means of partition 22.

In this case, the partition 22 can be made visible in the accessible compartment 14.

The present invention is by no means restricted to the embodiment described by way of example and represented in the drawing; on the contrary, a tanker for the transport of hazardous products according to the invention can be made in all sorts of shapes and dimensions while still remaining within the scope of the invention.

## Claims

1. Tanker (1) for the transport of hazardous products which is at least provided with a trailer (2) with a tank (3), **characterised in that** the tank (3) is provided with means for using the tank (3) for training purposes, and **in that** the tank (3) is provided with a double wall (4) of which at least the outer wall (5) is partly opened out.

2. Tanker (1) according to claim 1, **characterised in that** the tank (3) is provided with an access (13) to the inner space.

3. Tanker (1) according to any one of the preceding claims, **characterised in that** the tank (3) is provided with compartments (14) of which at least one compartment (15) is accessible via the aforesaid access (13).

4. Tanker (1) according to claim 3, **characterised in that** a floor (16) in the shape of a grid is provided in the accessible compartment (15).

5. Tanker (1) according to any one of claims 2 to 4, **characterised in that** a removable stepladder (13) is provided which leads to the aforesaid access (13) with one far end.

6. Tanker (1) according to any one of claims 2 to 5, **characterised in that** the aforesaid access (13) can be sealed.

7. Tanker (1) according to any one of the preceding claims, **characterised in that** the wall (4) of the tank (3) is provided with one or several viewing windows (12).

8. Tanker (1) according to any one of the preceding claims, **characterised in that** there are provisions (10) on the inner wall (6) of the tank (3) to apply warning signals (11) on related to the products to be transported, in particular warning signals related to ADR goods.

9. Tanker (1) according to any one of the preceding claims, **characterised in that** didactical messages and/or indications (21) are provided on the outside and inside.

10. Tanker (1) according to claim 3, **characterised in that** the tank (3) is provided with at least one pressure pipe running along the tanker (1) into the tank (3) of a compartment (14), and which is at least partly visible as the outer wall (5) is opened out.
